# EUROPEAN PATENT SPECIFICATION

(11) **EP 0 457 986 B1**
(45) Date of publication and mention of the grant of the patent: **03.05.1995**
(21) Application number: 90309895.2
(22) Date of filing: 10.09.1990
(51) Int. Cl.: G02B 6/44, H02G 1/08

(54) **Method of passing an elongate flexible element through a passage**
Verfahren zum Einführen eines langgestreckten flexiblen Körpers in eine Durchführung
Procédé pour introduire un corps flexible et allongé dans un passage

(30) Priority: 18.05.1990 JP 128288/90; 18.05.1990 JP 128289/90
(43) Date of publication of application: 27.11.1991
(73) Proprietor: Horii, Kiyoshi, Tokyo (JP); TOA KIKAI KOGYO CO., LTD., Shimonoseki-shi, Yamaguchi (JP)
(72) Inventor: Kiyoshi Horii, Tokyo (JP); Kakuji Oosumi, Shimonoseki-shi, Yamaguchi (JP)
(74) Representative: Leale, Robin George

(56) References cited:
- EP-A- 0 347 018
- US-A- 4 640 576

## Description

The present invention relates generally to a method of passing an elongate flexible element, such as cable or a wire, through a passage. More specifically, it relates to a method of passing such an element, for example an optical fiber, easily and efficiently through a long and thin passage, even as long as about 100m, with many bends.

Conventionally, it has been common practice for a conductor to be passed through a pipeline or other conduit pipe of a small diameter, in buildings, plants and communication facilities. Various methods of passing a conductor through a pipe have been developed.

Methods of passing a cable or a wire which are already known can generally be divided into ones using compressed gas and ones not using compressed gas. As to the former, a method of forcing a cable or wire through a passage by supplying compressed gas into the passage is know. As to the latter, a method of forcing a cable or wire manually through a passage using a polyethylene pipe or other means is known.

However, in the former method, there is a great limitation on the bore of the passage. The smaller the bore becomes, the more difficult it becomes to pass a cable or a wire through the passage. Conversely, as the bore becomes larger, the necessary pressure of compressed gas increases, causing safety problems. In passing a cable or a wire through a particularly long pipe, or a pipe with many bends, it is unavoidable that the cable or wire comes into contact with the inner wall of the pipe, hence making it extremely difficult to pass it through the pipe.

On the other hand, if a cable or wire is forced into a passage manually, it is virtually impossible to pass it through a particularly long pipe. Even when passing it through a short pipe, a lot of effort is required.

Recently, the use of optical fibers as a conductor has increased, but using the conventional methods as described above it is very difficult to pass an optical fiber through a passage smoothly, without any damage. Even with the method using compressed gas, it is impossible to pass an optical fiber with a connection terminal through a passage. For this reason, after a difficult passing operation, more difficult operations had to be carried out at work sites, with a microscope. Such operations place a great burden on even experienced operators.

EP-A-347018 discloses the use of coanda helical flow to transport short fibers through a pipe.

It has been proposed that a coanda helical flow developed by the inventors of the present invention could be used for the operation of passing a cable or a wire through a pipe. However, when passing a cable or a wire through a pipe by means of coanda helical flow, fluid control in a device for generating the coanda helical flow has been difficult, and fluid friction and back flow can generate in the passage. As a result, a cable or a wire cannot be passed completely through the passage.

According to the present invention there is provided a method of passing a flexible elongate element such as a cable or a wire through a passage, comprising connecting a discharge outlet port of a coanda helical flow device to said passage, supplying compressed gas from a portable-type compressed gas supply means via a coanda slit formed within said coanda device to generate the helical flow, and inserting said flexible elongate element into an end introducing port of said coanda helical flow device so that the flexible element can be entrained through the device within the helical flow characterised by providing a pressure release port in the passage.

Some embodiments of the invention will now be described by way of example and with reference to the accompanying drawings, in which:
Fig. 1 is a schematic drawing illustrating a method of passing a cable or a wire through a passage according to the present invention;
Figs. 2, 3, 4 and 5 are cross-sectional views of some different coanda helical flow devices that can be used in carrying out the present invention; and
Fig. 6 is a schematic drawing illustrating an embodiment of the present invention.

The present invention is based upon a principle of the conveyance of a flexible elongate element such a cable or a wire by means of a coanda helical flow that has been investigated by the inventors of the present invention and established as a practical process technology.

A coanda helical flow is characterized by a vast difference in velocity and density between the axial flow of a fluid and the flow around the axial one, and shows a steep velocity distribution. For instance, the degree of turbulence is indicated as 0.09, less than half of 0.2 indicated for turbulent flow, showing that coanda helical flow involves immensely different conditions from turbulent flow. It is furthermore formed as a unique helical flow by the synthesis of axial vector and radial vector.

This coanda helical flow is a flow that converges on the pipe axis in a pipe, and has the very advantageous features that it has a small degree of turbulence and that it can prevent hard collisions and contacts with the pipe wall brought about by the automatic vibration of the conveyed object.

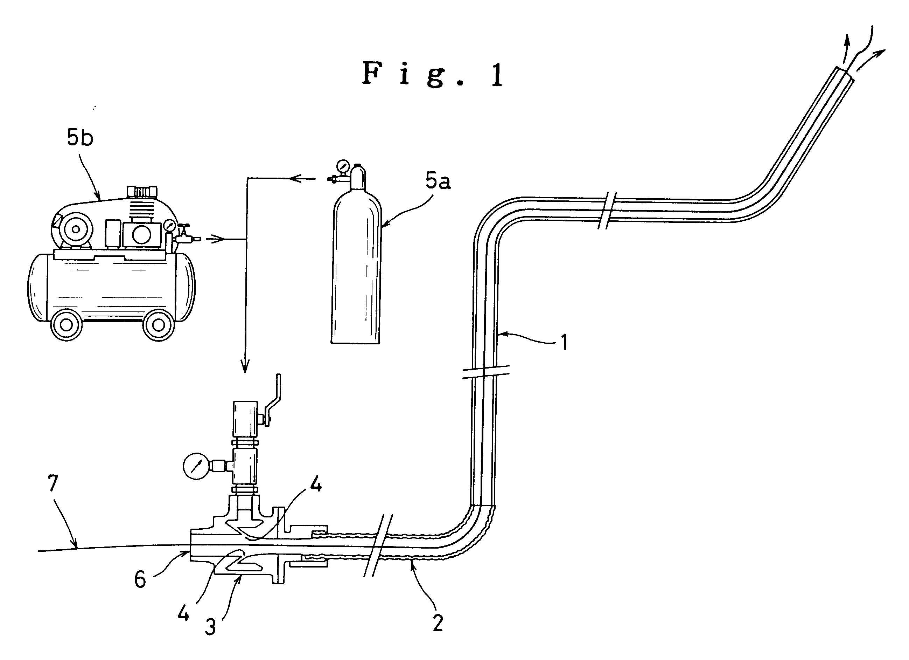

As shown in Fig. 1, in a method of passing a cable or wire or the like through a passage, a coanda helical flow device 3 is connected to the passage 1 in question through a flexible hose 2 or other means. Compressed gas is supplied in the direction for passing a cable or wire into the passage 1 by means of a portable-type compressed gas supply means 5a or 5b via coanda slit 4. Under these conditions, the cable or wire 7 is inserted into an end introducing inlet 6 of the coanda helical flow device.

In the context of the present invention, it is important to provide a pressure release port in the passage 1. By opening this pressure release port prior to passing a cable or wire 7 into the passage 1, it is possible to control the occurrence of a back flow of compressed gas, and thereby to pass the cable or wire through in a stable and smooth manner. There is no special limitation on the location of the pressure release port, but considering ease of operation at a work site, it is preferred to provide it at a connection between the passage 1 and the coanda helical flow device 3, for example in the flexible hose 2.

The cable or wire 7 is automatically conveyed by means of coanda helical flow into the flexible hose 2 and the passage 1, and passed through at high speed.

One of the features of the present embodiment is the use of a portable type of compressed gas supply means 5a or 5b. For instance, an appropriate bomb 5a of air or N₂, or an air compressor 5b, can be used. For the bomb 5a, one which has an internal pressure of about 50 to 180 kg/cm², for example, and which can maintain the pressure of compressed gas supplied to the coanda spiral flow device at a approximately 1 to 10 kg/cm², is preferred.

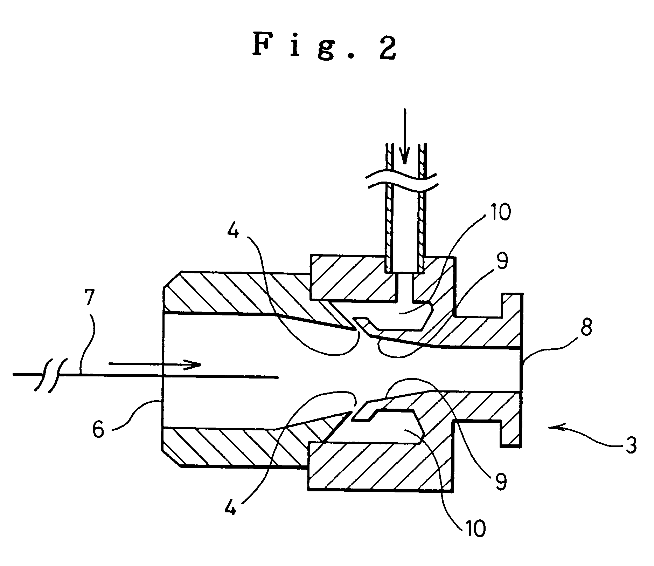

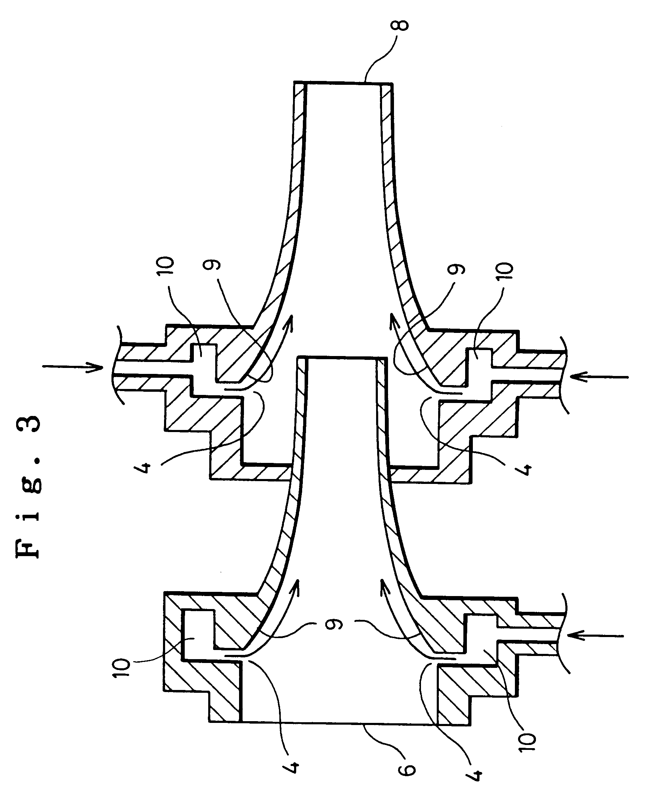

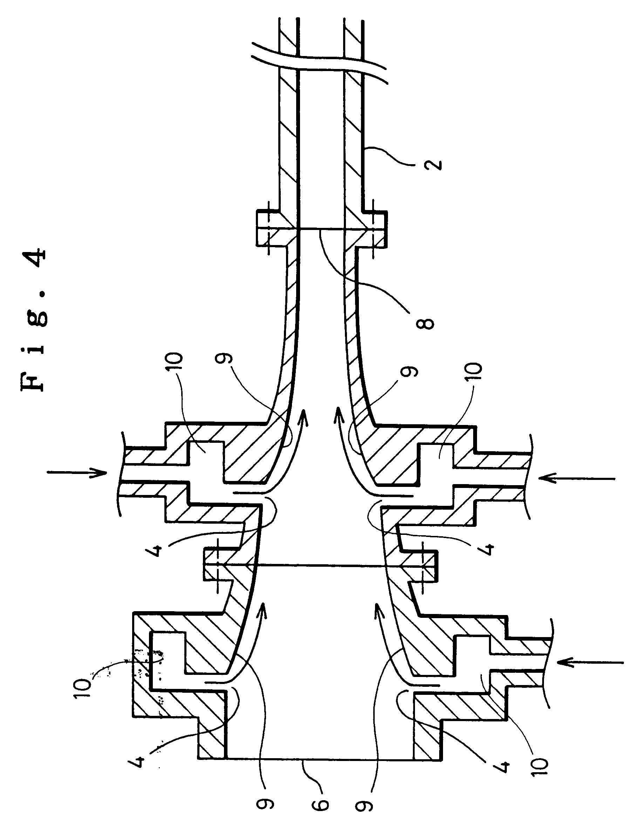

As to the coanda helical flow device 3, various types have been proposed by the inventors of the present invention, and any of them can be used, according to the particular application. In Fig. 2 for example, which is an enlarged view of the device illustrated in Fig. 1, the device has an annular coanda slit 4, an inclined surface 9 in the vicinity thereof, and a ventilation distribution chamber 10 for compressed gas between the discharge outlet 8 of the passage and the end introducing inlet 6, through which a cable or wire 7 is inserted. Alternatively, devices having a composite unit type of construction as indicated in Figs. 3 and 4 can also be used. Further details of the devices as shown in Figs. 3 and 4 are disclosed in European Patent Application No. 90309893.7, claiming priority from JP 342347/1989.

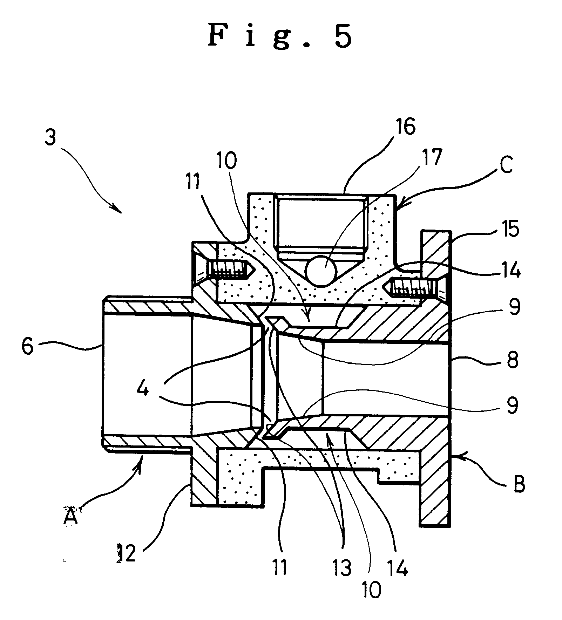

Moreover, as indicated in Fig. 5, a device comprising three units can be used; namely a first unit A having an end introducing port 6, an outer circumferential inclined or erect surface 11 on the end opposite to the port 11, and a coupling flange 12; a second unit B having a discharge outlet 8, an inner circumferential inclined or curved surface 13 on the end opposite to said outlet, which surface opposes the inclined or erect surface 11 of the first unit A to form a coanda slit 4, a conically tapered inclined surface 9 extending from said inclined or curved surface 13 towards the discharge outlet 8, an annular groove 14 on the outer surface adjacent the surface 13, and a coupling flange 15; and a removable outer peripheral tube unit c having a ventilation inlet 16 which covers the inclined or erect surface 11 and the annular groove 14 and has both ends in close contact with the coupling flanges 12 and 15 of the units A and B, to form a ventilation distribution chamber 10 which communicates with said ventilation inlet 16. A conduit 17 is provided to supply compressed gas to the ventilation distribution chamber 10. The coanda helical flow device 3 shown in Fig. 5 which is also the subject of European Patent Application No. 90309894.5, claiming priority from JP 128289/1990, is a very convenient unit which can be assembled at any work site where a cable or a wire is to be passed through a passage, at any time.

In either case, by setting the taper angle of the inclined surface 9 at approximately 20° to 70°, a coanda helical flow is formed, generating a strong vacuum force at the end introducing port 6.

In operation, electric wires, optical fibers or other conductors, or plastic ropes, or other flexible elongate elements, can be passed directly through the passage 1. In any case, a passage of up to about 150m in length, not limited to a normal indoor passage 25m to 30m long, can be passed through in a single pass.

Examples will be described as follows.

### EXAMPLE 1

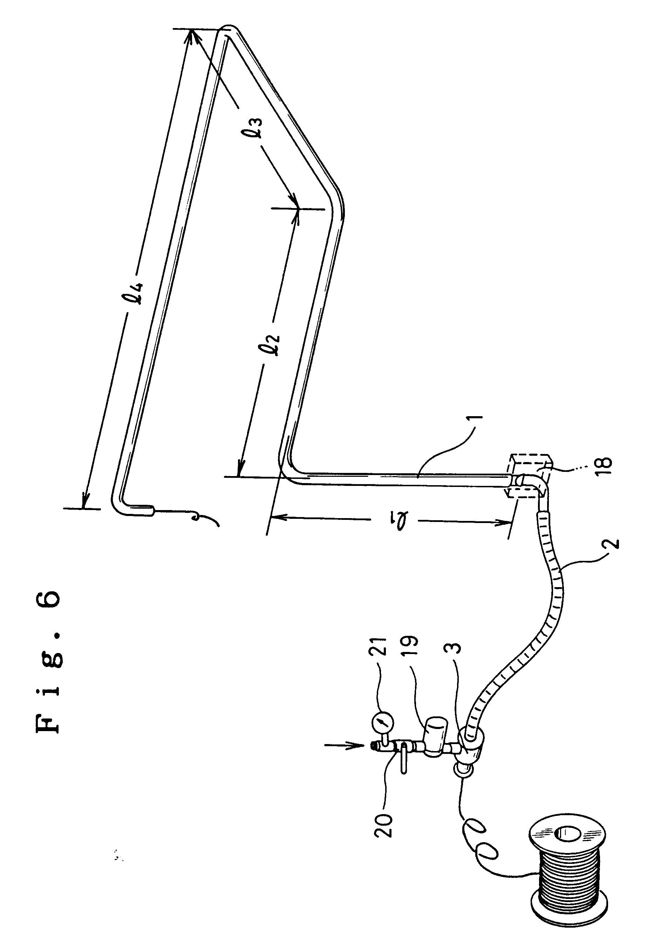

As shown in Fig. 6, a polyethylene rope was passed through a passage 1 with a total length of 25m consisting of 1₁ = 5m, 1₂ = 5m, 1₃ = 5m, and 1₄ = 10m. For the passage 1 in this example, a 22mm-dia. CD pipe was used, and the diameter of the polyethylene rope was 3mm.

The passage 1 was connected to a flexible hose 2 at joining box 18, and coanda helical flow device 3 as shown in Fig. 5 was linked to said flexible hose 2. The flexible hose 2 was 1.5m, long.

The coanda helical flow device 3 was provided with an air filter 19, an opening and closing valve 20 and a pressure gauge 21, and compressed air was supplied by a compressor.

Using compressed air with a pressure of 6 kg/cm², a 25m long passage 1 could be passed in only a few seconds. The passing operation proceeded smoothly. At that time, a 3 mm-dia. pressure release port was opened in the vicinity of the said joint box 18 of the flexible hose 2, allowing the pressure to release prior to the passing operation. There was no back flow of compressed air in any passing test.

Also in this example, the inclined angle of the inclined surface 9 of the coanda helical flow device 3 was set at 15°, the angle of the inclined surface 13 was set at 60°, while the coanda slit clearance was 0.18mm.

### EXAMPLE 2

When the passing operation was conducted as in EXAMPLE 1 but using a N₂ gas bomb of 150 kg/cm² a very smooth passing operation was performed at a pressure of 6 kg/cm².

### EXAMPLE 3

A 3 mm-dia. polyethylene rope was passed through a conduit with a diameter of 22 mm and a length of 25m in a similar manner as in EXAMPLE 2. The passing operation was completed in only a few seconds.

### EXAMPLE 4

A 2.8 mm-dia. optical fiber cable with a connecting terminal was passed through a conduit with a bore of 22mm and a length of 25m in a similar manner as in EXAMPLE 1. A smooth passing was effected in approximately two minutes without any damage to the optical fiber.

The present invention is not limited to the examples as described above. Various modifications are possible in the type, diameter, bore, length or other details of an element to be passed, a guide, and a passage.

## Claims

1. A method of passing a flexible elongate element (7) such as a cable or a wire through a passage (1), comprising connecting a discharge outlet port of a coanda helical flow device (3) to said passage, supplying compressed gas from a portable-type compressed gas supply means (5a,5b) via a coanda slit (4) formed within said coanda device to generate the helical flow, and inserting said flexible elongate element into an end introducing port of said coanda helical flow device so that the flexible element can be entrained through the device within the helical flow characterised by providing a pressure release port in the passage.

2. A method as claimed in claim 1, where the said coanda helical flow device used by the method comprises: a first unit (A) having a through bore with said end introducing port (6), an erect or inclined outer circumferential surface (11) around the bore exit on the end face opposite to said introducing port, and a coupling flange on the outside of said first unit; a second unit (B) having a through bore with said discharge outlet (8), an inclined or curved inner circumferential surface (13) around the bore entrance on the end face opposite to said discharge outlet, the entrance aperture of the bore being larger than that of said discharge outlet, said inclined or curved surface of the second unit opposing the said erect or inclined surface of said first unit to form a coanda slit, the entrance portion of the bore of the second unit having a conically tapered inclined inner surface extending from said inclined or curved surface of the second unit towards the said discharge outlet, an annular groove being formed in the second unit's outer surface adjacent the end having the said entrance port, and a coupling flange on the outside of said second unit; and a removable outer peripheral tube unit (c) having a ventilation inlet, said tube enclosing the opposed surfaces forming said coanda slit and the annular groove in the outside surface of the said second unit, the ends of the tube being in close contact with the coupling flanges of said first and second units respectively thereby forming a ventilation distribution chamber which communicates with said ventilation inlet.

3. A method as claimed in claim 1 or 2, wherein the said compressed gas supply means is a compressed gas bomb.

4. A method as claimed in any preceding claim, wherein the said element is an optical fiber.

5. A method as claimed in any preceding claim, wherein the said element is an optical fiber with a connecting terminal.

## Patentansprüche

1. Verfahren zum Hindurchführen eines flexiblen länglichen Elements (7), wie beispielsweise eines Kabels oder eines Drahts, durch einen Kanal (1), umfassend:
Verbinden einer Ausstoßauslaßöffnung einer Coanda-Spiralstromvorrichtung (3) mit dem Kanal,
Zuführen von Druckgas von einem Druckgaszufuhrmittel (5a, 5b) des tragbaren Typs über einen in der Coanda-Vorrichtung ausgebildeten Coanda-Schlitz (4), um den Spiralstrom zu erzeugen, und
Einbringen des flexiblen länglichen Elements in eine Endeneinführöffnung der Coanda-Spiralstromvorrichtung, so daß das flexible Element in dem Spiralstrom durch die Vorrichtung mitgenommen werden kann,
**gekennzeichnet durch**
Vorsehen einer Druckablaßöffnung in dem Kanal.

2. Verfahren nach Anspruch 1, wobei die in dem Verfahren verwendete Coanda-Spiralstromvorrichtung umfaßt:
eine erste Einheit (A), die eine Durchgangsbohrung mit der Endeneinführöffnung (6), eine aufrechte oder geneigte äußere Umfangsfläche (11) um den Bohrungsausgang auf der der Einführöffnung entgegengesetzten Endseite und einen Kuppelflansch an der Außenseite der ersten Einheit aufweist,
eine zweite Einheit (B), die eine Durchgangsbohrung mit dem Ausstoßauslaß (8), eine geneigte oder gekrümmte innere Umfangsfläche (13) um den Bohrungseingang auf der dem Ausstoßauslaß entgegengesetzten Endseite und einen Kuppelflansch an der Außenseite der zweiten Einheit aufweist, wobei die Eingangsapertur der Bohrung größer als die des Ausstoßauslasses ist, wobei die geneigte oder gekrümmte Fläche der zweiten Einheit der aufrechten oder geneigten Fläche der ersten Einheit zur Bildung eines Coanda-Schlitzes gegenüberliegt, wobei der Eingangsbereich der Bohrung der zweiten Einheit eine von der geneigten oder gekrümmten Fläche der zweiten Einheit zum Ausstoßauslaß hin verlaufende, konisch verjüngte, geneigte Innenfläche aufweist, wobei in der Außenfläche der zweiten Einheit dem Ende mit der Eingangsöffnung benachbart eine Ringnut ausgebildet ist, sowie
eine entfernbare Außenumfangsrohreinheit (C) mit einem Lüftungseinlaß, wobei das Rohr die den Coanda-Schlitz bildenden gegenüberliegenden Flächen und die Ringnut in der Außenfläche der zweiten Einheit umschließt, wobei die Enden des Rohrs jeweils in engem Kontakt mit dem Kuppelflansch der ersten bzw. der zweiten Einheit stehen und dadurch eine Lüftungsverteilkammer bilden, welche mit dem Lüftungseinlaß in Verbindung steht.

3. Verfahren nach Anspruch 1 oder 2, bei dem das Druckgaszufuhrmittel eine Druckgasbombe ist.

4. Verfahren nach einem der vorangehenden Ansprüche, bei dem das Element eine optische Faser ist.

5. Verfahren nach einem der vorangehenden Ansprüche, bei dem das Element eine optische Faser mit einem Verbindungsanschluß ist.

## Revendications

1. Procédé de passage d'un élément allongé et souple (7), tel qu'un câble ou un fil métallique, dans un passage (1), comprenant le raccordement d'un orifice de sortie d'évacuation d'un dispositif (3) à écoulement hélicoïdal de Coanda audit passage, la transmission d'un gaz comprimé d'un dispositif portatif (5a, 5b) d'alimentation en gaz comprimé par l'intermédiaire d'une fente (4) de Coanda formée dans le dispositif de Coanda pour la création d'un écoulement hélicoïdal, et l'introduction de l'élément allongé souple dans un orifice d'introduction d'extrémité du dispositif à écoulement hélicoïdal de Coanda de manière que l'élément souple puisse être entraîné dans le dispositif à l'intérieur de l'écoulement hélicoïdal, caractérisé par la disposition d'un orifice de réduction de pression dans le passage.

2. Procédé selon la revendication 1, dans lequel le dispositif à écoulement hélicoïdal de Coanda utilisé pour la mise en oeuvre du procédé comprend une première unité (A) ayant un trou débouchant par l'orifice (6) d'introduction d'extrémité, une surface (11) circonférentielle externe inclinée ou dressée placée autour de la sortie du trou à la face d'extrémité opposée à l'orifice d'introduction, et un flasque d'accouplement sur l'extérieur de la première unité, une seconde unité (B) ayant un trou débouchant par l'orifice d'évacuation (8), une surface (13) circonférentielle interne courbe ou inclinée autour de l'entrée du trou à la face d'extrémité opposée à la sortie d'évacuation, l'ouverture d'entrée du trou étant plus grande que celle de la sortie d'évacuation, la surface inclinée ou courbe de la seconde unité étant en face de la surface inclinée ou dressée de la première unité pour la formation d'une fente de Coanda, la partie d'entrée du trou de la seconde unité ayant une surface tronconique interne inclinée partant de la surface inclinée ou courbe de la seconde unité vers la sortie d'évacuation, une gorge annulaire étant formée à la surface externe de la seconde unité près de l'extrémité ayant l'orifice d'entrée, et un flasque d'accouplement placé à l'extérieur de la seconde unité, et une unité à tube périphérique externe amovible (C) ayant une entrée de ventilation, le tube entourant les surfaces opposées formant la fente de Coanda et la gorge annulaire à la surface externe de la seconde unité, les extrémités du tube étant en contact intime avec les flasques d'accouplement de la première et de la seconde unité respectivement afin qu'une chambre de distribution de ventilation soit formée et communique avec l'entrée de ventilation.

3. Procédé selon la revendication 1 ou 2, dans lequel le dispositif d'alimentation en gaz comprimé est une bouteille de gaz comprimé.

4. Procédé selon l'une quelconque des revendications précédentes, dans lequel l'élément est une fibre optique.

5. Procédé selon l'une quelconque des revendications précédentes, dans lequel l'élément est une fibre optique ayant une borne de raccordement.
